# EUROPÄISCHE PATENTSCHRIFT

(11) **EP 2 549 575 B1**
(45) Veröffentlichungstag und Bekanntmachung des Hinweises auf die Patenterteilung: **25.11.2015**
(21) Anmeldenummer: 11174693.9
(22) Anmeldetag: 20.07.2011
(51) Int. Cl.: H01M 8/04, H01M 8/02, C09K 5/10, C11D 1/72, C11D 3/37, C08G 65/08, C08L 71/02

(54) **Verfahren zum Kühlen einer Brennstoffzellenanordnung**
Method for cooling a fuel cell assembly
Procédé de refroidissement d'un agencement de cellules de combustible

(43) Veröffentlichungstag der Anmeldung: 23.01.2013
(73) Patentinhaber: Siemens Aktiengesellschaft, 80333 München (DE)
(72) Erfinder: Brandt, Torsten, 91301 Forchheim (DE); Hammerschmidt, Albert, 91056 Erlangen (DE); Hartnack, Herbert, 91056 Erlangen (DE)

(56) Entgegenhaltungen:
- EP-A1- 1 262 535
- GB-A- 1 592 203
- US-A- 4 010 110
- US-A1- 2004 126 630
- US-A1- 2005 130 865
- US-B1- 6 887 597

## Beschreibung

Die Erfindung betrifft ein Verfahren zum Kühlen einer Brennstoffzellenanordnung umfassend mehrere zwischen Bipolarplatten angeordnete Membran-Elektroden-Einheiten, wobei mit Hilfe eines Kühlmittels, insbesondere mit Hilfe eines Deionats, Wärme der Brennstoffzellenanordnung abgeführt wird. Die Erfindung betrifft weiterhin die Verwendung eines Kühlmittels, insbesondere eines Deionats, zum Kühlen einer Brennstoffzellenanordnung sowie eine Brennstoffzellenanordnung umfassend mehrere zwischen Bipolarplatten angeordnete Membran-Elektroden-Einheiten sowie einen Kühlmittelkreislauf mit einem Kühlmittel, insbesondere mit Deionat, zum Abführen von Wärme der Brennstoffzellenanordnung.

Brennstoffzellen gewinnen immer mehr an Bedeutung in zukunftsweisenden Konzepten für die Energieerzeugung. Insbesondere Niedertemperatur-Brennstoffzellen auf Basis der Polymer-Elektrolyt-Membran-(PEM)-Technologie werden als umweltfreundliche und effiziente Energiewandler für portable, mobile und stationäre Anwendungen diskutiert.

Wesentliches Element einer PEM-Einzelzelle ist eine Membranelektrodeneinheit. Diese besteht aus zwei Elektroden (einer Anode und einer Kathode) und eine sich zwischen den beiden Elektroden befindlichen Elektrolyt-Membran. Zwischen den Elektroden und der Elektrolyt-Membran befindet sich eine Katalysatorschicht, in der die relevanten physikalischen und elektrochemischen Vorgänge, wie Adsorption von Wasserstoff und Sauerstoff am Katalysator, Abgabe und Aufnahme von Elektronen und die Bildung von Wasser Kathodenseitig durch Kombination von durch die Membran diffundierenden Protonen und (reduziertem) Sauerstoff erfolgen.

Beim Betrieb einer Brennstoffzelle muss entstehende Verlustwärme aus dem aktiven Bereich der Brennstoffzelle weitgehend entfernt werden, um lokale Überhitzungen (sogenannte "hot spots") in der Brennstoffzelle zu vermeiden. Dies erfolgt bei hohen Stromdichten in einer Brennstoffzelle am effektivsten durch ein flüssiges Kühlmittel, das die Brennstoffzelle durchströmt.

In einem Brennstoffzellenstapel befinden sich die Elektroden an der der Elektrolyt-Membran bzw. Katalysatorschicht abgewandten Seite im Kontakt mit jeweils einer so genannten Bipolarplatte oder Kühleinheit. Die Bipolarplatte hat die Aufgabe, die einzelnen Brennstoffzellen (medienseitig) zu trennen, für Stromfluss im Zellenstapel zu sorgen und die Reaktionswärme zu entfernen.

Neben der Stromleitung und der Führung der Reaktanten Wasserstoff und Sauerstoff, erfüllen die Bipolarplatten ihre Kühlfunktion, indem Wasser durch diese geleitet wird. Wegen seiner hohen spezifischen Wärmekapazität, der geringen elektrischen Leitfähigkeit, der guten Medienverträglichkeit und der niedrigen Betriebskosten kommt bei Brennstoffzellen mit einer Polymer-Elektrolyt-Membran (PEM-Brennstoffzellen) hauptsächlich Deionat als Kühlmittel zum Einsatz. Das Kühlwasser darf nur eine sehr geringe Leitfähigkeit haben und sollte möglichst gasfrei sein, damit sich keine Gasblasen an der Oberfläche der Bipolarplatten festsetzen, da Bereiche mit Gasblasen schlechter gekühlt werden können und daher lokal überhitzt werden. Aufgrund physikalischer und konstruktiver Vorgaben ist jedoch nicht auszuschließen, dass auch ursprünglich gasfreies Kühlwasser wieder Gas aufnimmt und mit Blasen versehen ist.

In der Vergangenheit wurde bei der Inbetriebnahme einer Brennstoffzellenanlage darauf geachtet, dass durch Umpumpen gasförmige und gelöste Luft aus dem System entfernt wird. Spezielle Vorschriften, in bestimmten Zeiträumen die Pumpendrehzahl auf maximale Drehzahl zu stellen, Überprüfung der Gashaltigkeit durch optische Beobachtung kleiner Volumina in Schaugläsern bei Entspannung oder Einsatz eines so genannten Vakuumgases bis hin unterhalb des Sättigungspunktes sind geeignete Mittel. Ziel dieser Methoden ist, kein Zwei-Phasen-Gemisch (Gas/Wasser) im Kühlwasser zuzulassen, so dass eine Gasansammlung und damit eine lokale Überhitzung an der Bipolarplatte nicht auftreten können.

Aus der EP 1 262 535 A1 ist weiterhin ein Kühlmittel für einen Brennstoffzellenstapel bekannt, das zum Herabsetzen der Leitfähigkeit ein Rostschutz-Additiv, welches auch ein Tensid sein kann, enthält.

In der US 6,887,597 B1 ist außerdem eine Reinigung eines Kühlsystems einer Brennstoffzelle mit Hilfe eines Reinigung-Passivierungsmittels beschrieben. Das Reinigung-Passivierungsmittels enthält hierbei ein Tensid. Die Reinigung bzw. Passivierung des Kühlsystems erfolgt jedoch nicht im Betrieb der Brennstoffzelle, sondern vor dem Kontakt der Komponenten mit dem Kühlmittel, wenn neue Komponenten installiert werden, oder in periodischen Zeitabständen.

Der Erfindung liegt die Aufgabe zugrunde, einen Betrieb einer Brennstoffzelle zu ermöglichen, bei dem eine effiziente Kühlung im Hinblick auf eine Unterdrückung lokaler Überhitzugen erfolgt.

Die Aufgabe wird erfindungsgemäß gelöst durch ein Verfahren zum Kühlen einer Brennstoffzellenanordnung umfassend zwischen Bipolarplatten angeordnete Membran-Elektroden-Einheiten, wobei mit Hilfe eines Kühlmittels, insbesondere mit Hilfe eines Deionats, Wärme der Brennstoffzellenanordnung abgeführt wird, gemäß Patentanspruch 1.

Die Aufgabe wird gemäß Patentanspruch 4 weiterhin erfindungsgemäß gelöst durch eine Verwendung von Polyethylen-Polypropylenglykol-Monodecyl-Ether als ein nichtionisches Tensid mit einem Trübungspunkt unterhalb 30°C, insbesondere unterhalb 20°C, in einem Kühlmittel, insbesondere einem Deionat, zum Kühlen einer Brennstoffzellenanordnung.

Die Aufgabe wird schließlich erfindungsgemäß gelöst durch eine Brennstoffzellenanordnung umfassend mehrere zwischen Bipolarplatten angeordnete Membran-Elektroden-Einheiten sowie einen Kühlmittelkreislauf mit einem Kühlmittel, insbesondere mit Deionat, zum Abführen von Wärme der Brennstoffzellenanordnung, gemäß Patentanspruch 5.

Die in Bezug auf das Verfahren nachstehend aufgeführten Vorteile und bevorzugten Ausgestaltungen sind sinngemäß auf die Brennstoffzelle und auf die Verwendung des ein nichtionisches Tensid enthaltenden Kühlmittels zu übertragen.

Die Erfindung basiert auf der Idee, die Oberflächenspannung des Systems Kühlmittel/Gasblasen/Oberfläche der Bipolarplatte soweit wie möglich herabzusetzen, so dass sich die Gasblasen an der Oberfläche nicht festsetzen können und somit leicht ausgetrieben werden. Dies erfolgt, indem dem Kühlmittel ein nichtionisches Tensid beigemischt wird. Unter Tensid wird hierbei eine Substanz verstanden, welche die Oberflächenspannung des Kühlmittels oder die Grenzflächenspannung zwischen dem Kühlmittel, den Gasblasen und der Oberfläche der Bipolarplatte herabsetzt.

Als nichtionisches Tensid wird ein Tensid bezeichnet, das keine disoziierbaren funktionellen Gruppen enthält und sich daher im Wasser nicht in Ionen auftrennt. Zudem enthält das Tensid auch insbesondere keine ionischen Verunreinigungen wie z.B. Chloride, Sulfate oder Eisenionen, damit die Gesamtleitfähigkeit entsprechend niedrig bleibt. Durch den Einsatz eines nichtionischen Tensids wird gewährleistet, dass das Kühlmittel weiterhin eine weitestgehend nichtionische Lösung darstellt, wodurch die elektrische Leitfähigkeit des Kühlmittels sehr niedrig ist. Somit wird vermieden, dass elektrische Potentiale verschleppt werden und in mit dem Kühlmittel verbundenen metallischen Komponenten Korrosionsvorgänge auftreten können.

Das nichtionische Tensid wird insbesondere dem Kühlkreislauf der Brennstoffzellenanordnung zugeführt. Hierfür ist zweckdienlicherweise eine Zufuhrleitung für das nichtionische Tensid vorgesehen, die in den Kühlmittelkreislauf mündet. Durch die Zufuhrleitung kann ausschließlich das Tensid in den Kreismittelkreislauf eingespeist, so dass die Vermischung mit dem Kühlmittel erst im Kühlmittelkreislauf stattfindet. Alternativ kann über die Zufuhrleitung das bereits im Kühlmittel aufgelöste Tensid dem Kreislauf zugeführt werden.

Gemäß der Erfindung weist das Tensid einen Trübungspunkt unterhalb 30°C und insbesondere unterhalb 20°C auf. Nichtionische Tenside mit einem niedrigen Trübungspunkt sind besonders geeignet, da das vorteilhafte Verhalten bzw. die Reduzierung der Oberflächenspannung oberhalb des Trübungspunktes stattfindet. Um einen möglichst weiten Nutzungsbereich des Tensides zu erhalten, ist daher ein niedriger Trübungspunkt vorteilhaft.

Bevorzugt ist das Tensid ein schwachschäumendes Tensid. Schwachschäumende oder schaumarme Tenside sind Tenside, bei denen die Schaumbildung geringfügig ist. Mit dem Begriff schaumarm oder schwachschäumend werden im Rahmen der vorliegenden Erfindung Tenside bezeichnet, die in wässrigem Milieu eine nur sehr geringe Schaumentwicklung zeigen. Der Einsatz von einem solchen Tensid ist insbesondere in einem offenen Kühlmittelkreislauf von Vorteil.

Vorzugsweise ist die Konzentration des im Kühlmittel aufgelösten Tensids kleiner als 0,1 Vol.-%.

Erfindungsgemäß wird als Tensid Polyethylen-Polypropylenglycol-Monodecyl-Ether verwendet, das unter der Handelsbezeichnung CHE^{®}-ED 2032 bekannt ist. Durchgeführte Untersuchungen haben belegt, dass sich dieses Tensid aufgrund seiner niedrigen Leitfähigkeit, seines niedrigen Trübungspunktes und seiner Fähigkeit die Oberflächenspannung stark herabzusetzen sich besonders für den Einsatz in einem Kühlmittel für eine Brennstoffzelle eignet.

Der Einsatz von nichtionischen Tensiden im Kühlmittel für eine Brennstoffzelle zeichnet sich dadurch aus, dass diese Tenside in einem bereits bestehenden Kühlmittelkreislauf für eine Brennstoffzelle oder eine Brennstoffzellenanlage benutzt werden können, ohne dass wesentliche konstruktive Änderungen am Kühlmittelkreislauf erforderlich sind. Durch die Verwendung eines ein nichtionisches Tensid enthaltenden Kühlmittels liegt zudem eine Energieeinsparung in der Gegenwart von Gasblasen vor, da durch den Einsatz der Tenside sich der Durchfluss bei gleicher Pumpendrehzahl erhöht, oder umgekehrt, bei Nenndurchfluss erhält man eine niedrigere Pumpendrehzahl.

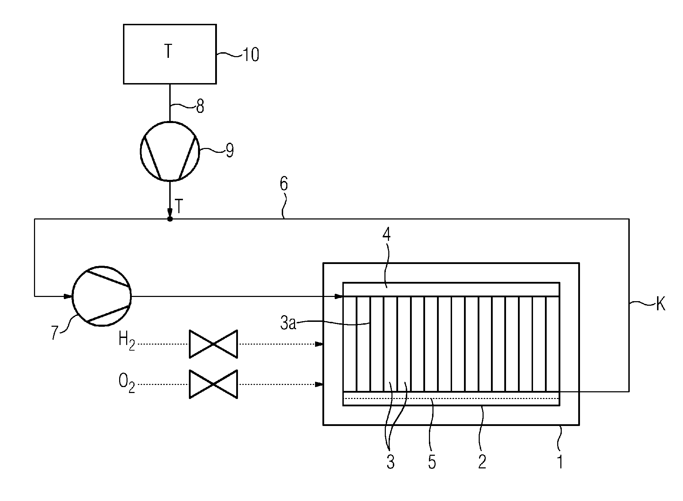

Ein Ausführungsbeispiel der Erfindung wird anhand einer Zeichnung näher erläutert. Die einzige Figur zeigt hierbei vereinfacht und schematisch eine Brennstoffzellenanordnung 1, die einen Block 2 aufeinandergestapelter Membran-Elektroden-Einheiten 3 aufweist. Zwischen den Membran-Elektroden-Einheiten 3 sind sogenannte Bipolarplatten 3a vorgesehen, die parallel von einem Kühlmittel K durchströmbar sind.

Die Zufuhr des Kühlmittels K zu den einzelnen Membran-Elektroden-Einheiten 3 erfolgt über einen Kühlmittelverteilerkanal 4 und die Abfuhr des Kühlmittels K über einen Kühlmittelsammelkanal 5.

Das Kühlmittel K wird hierbei in einem Kreislauf 6 geführt, so dass das über den Sammelkanal 5 von der Brennstoffzellenanordnung 1 abführbare Kühlmittel K über den Kreislauf 6 der Brennstoffzellenanordnung 1, d.h. dem Kühlwasserverteilerkanal 4, wieder zuführbar ist. Eine in dem Kreislauf 6 angeordnete Kühlmittelpumpe 7 dient zum Pumpen des Kühlmittels K durch den Kreislauf 6. Die Förderleistung der Kühlmittelpumpe 7 ist über einen Motor variabler Drehzahl steuerbar. Weitere in dem Kreislauf 6 angeordnete Komponenten zur Kühlung des Kühlmittels K, wie z.B. Wärmetauscher, sind aus Gründen der Übersichtlichkeit nicht dargestellt.

Dem Kühlmittel K wird ein nichtionisches Tensid T zugeführt. Die Konzentration des Tensids T im Kühlmittel K liegt dabei bei 0,1 Vol.-%. Mit Hilfe des Tensids T wird die Oberflächenspannung an den Bipolarplatten 3a stark herabgesetzt, so dass sich Gasblasen an der Oberfläche der Bipolarplatten 3a nicht festsetzen können und dadurch eine lokale Überhitzung der Bipolarplatten vermieden wird. Mittels einer Zufuhrleitung 8, in der eine Pumpe 9 integriert ist, wird das Tensid T aus einem Behälter 10 in den Kreislauf 6 eingespeist und vermischt sich dort mit dem Kühlmittel K. Alternativ kann der Behälter 10 eine Mischung aus dem Kühlmittel K und dem nichtionischen Tensid T enthalten, so dass über die Zufuhrleitung 8 das mit dem Tensid vermischte Kühlmittel K in den Kreislauf 6 gefördert wird.

Ein Vergleich verschiedener nichtionischer Tenside T bei ihrem Einsatz in einem Kühlmittel K für eine Brennstoffzellenanordnung 1 geht aus Tabelle 1 hervor.

**Tabelle 1**

| Name | Antarox BL-330 | CHE-ED 2561 | CHE-ED 2032 | Soprophor 796/P | Antarox FM63 | Antarox FM33 | Igepal CO-630 |
|---|---|---|---|---|---|---|---|
| Oberflächenspannung (qualitativ bewertet) | stark herabgesetzt | kaum herabgesetzt | stark herabgesetzt | minimal herabgesetzt | minimal herabgesetzt | minimal herabgesetzt | minimal herabgesetzt |
| Schaumbildung | ja | gering | ja | ja | ja | ja | ja |
| Trübungspunkt (°C) | 28-33 | 60 | < 16 | | 43-47 | 23-33 | |
| Leitfähigkeit | erhöht | nicht gemessen | ∼ 0 | ∼ 0 | ∼ 0 | ∼ 0 | ∼ 0 |
| Farbe | milchig, trüb | klar | milchig, trüb | klar | klar | klar | klar |

Für die Tensiduntersuchungen wurden jeweils 0,1 %-ige Lösungen, d.h. 1 ml Tensid auf 1 1 Deionat, verwendet. Bei dieser Untersuchung haben Anderox BL-330 und CHE^{®}-ED 2032 eine besonders starke Reduzierung des Kontaktwinkels als Maß für die Reduzierung der Oberflächenspannung gezeigt. Anderox BL-330 bewirkt dabei die stärkste Reduzierung des Kontaktwinkels, allerdings verbietet die hohe elektrische Leitfähigkeit des damit versetzten Kühlmittels den Einsatz von diesem Tensid.

Wesentlich für den Einsatz des nichtionischen Tensids ist auch seine Freiheit von ionischen Verunreinigungen, um die Kühlmittelleitfähigkeit möglichst niedrig zu halten und Korrosion, beispielsweise aufgrund von Chlorid-Verunreinigungen, zu vermeiden. Daher wird bevorzugt ein Tensid verwendet, das die Leitfähigkeit des Kühlmittels nicht oder nur geringfügig beeinflusst.

Das Temperaturverhalten einer Bipolarplatte im Betrieb einer Brennstoffzelle wurde untersucht, wobei als Kühlmedium Deionat verwendet wurde, welches CHE^{®}-ED 2032 mit einer Konzentration von 0,1 Vol.-% enthält. Durch die Zudosierung dieses Tensids wurde eine schnelle Auslösung der Gasansammlungen an der Oberfläche der Bipolarplatte beobachtet, das zu einer deutlichen Abnahme der Temperaturerhöhungen geführt hat. Das Verschwinden oder die Reduzierung der lokalen Überhitzungen erfolgte damit im Minutenbereich. Im weiteren zeitlichen Verlauf des Betriebes der Brennstoffzellen wurden lediglich singulär auftretende lokale Temperaturerhöhungen bis ca. 15°C gegenüber der Temperatur des Deionats erfasst.

## Patentansprüche

1. Verfahren zum Kühlen einer Brennstoffzellenanordnung (1) umfassend zwischen Bipolarplatten (3a) angeordnete Membran-Elektroden-Einheiten (3), wobei mit Hilfe eines Kühlmittels, insbesondere mit Hilfe eines Deionats, Wärme der Brennstoffzellenanordnung (1) abgeführt wird, **dadurch gekennzeichnet, dass** dem Kühlmittel (K) zur Reduzierung der Oberflächenspannung der Bipolarplatten (3a) ein nichtionisches Tensid (T) zugegeben wird, welches einen Trübungspunkt unterhalb 30°C und insbesondere unterhalb 20°C aufweist, wobei als Tensid (T) Polyethylen-Polypropylenglykol-Monodecyl-Ether verwendet wird.

2. Verfahren nach Anspruch 1,
**dadurch gekennzeichnet, dass** das Tensid (T) ein schaumarmes Tensid ist.

3. Verfahren nach einem der vorhergehenden Ansprüche,
**dadurch gekennzeichnet, dass** die Konzentration des im Kühlmittel (K) aufgelösten Tensids (T) kleiner 0,1 Vol.-% ist.

4. Verwendung von Polyethylen-Polypropylenglykol-Monodecyl-Ether als ein nichtionisches Tensid (T) mit einem Trübungspunkt unterhalb 30°C, insbesondere unterhalb 20°C, in einem Kühlmittel (K), insbesondere einem Deionat, zum Kühlen einer Brennstoffzellenanordnung (1).

5. Brennstoffzellenanordnung (1) umfassend mehrere zwischen Bipolarplatten (3a) angeordnete Membran-Elektroden-Einheiten (3) sowie einen Kühlmittelkreislauf (6) mit einem Kühlmittel (K), insbesondere mit Deionat, zum Abführen von Wärme der Brennstoffzellenanordnung (1),
**dadurch gekennzeichnet, dass** das Kühlmittel (K) zur Reduzierung der Oberflächenspannung der Bipolarplatten ein nichtionisches Tensid (T) mit einem Trübungspunkt unterhalb 30°C, insbesondere unterhalb 20°C, enthält, wobei das Tensid (T) Polyethylen-Polypropylenglykol-Monodecyl-Ether ist.

6. Brennstoffzellenanordnung (1) nach Anspruch 5,
umfassend eine Zufuhrleitung (8) für das nichtionischen Tensid (T), die in den Kühlmittelkreislauf (6) mündet.

## Claims

1. Method for cooling a fuel cell assembly (1) comprising membrane-electrode units (3) disposed between bipolar plates (3a), wherein with the aid of a coolant, in particular with the aid of a deionate, heat is conducted away from the fuel cell assembly (1), **characterised in that** a non-ionic surfactant (T), which has a cloud point below 30°C and in particular below 20°C, is added to the coolant (K) to reduce the surface tension of the bipolar plates (3a), wherein polyethylene-polypropylene glycol monododecyl ether is used as surfactant (T).

2. Method according to claim 1,
**characterised in that** the surfactant (T) is a foam-inhibited surfactant.

3. Method according to one of the preceding claims,
**characterised in that** the concentration of the surfactant (T) dissolved in the coolant (K) is less than 0.1 vol%.

4. Use of polyethylene-polypropylene glycol monododecyl ether as a non-ionic surfactant (T) with a cloud point below 30°C, in particular below 20°C, in a coolant (K), in particular a deionate, for cooling a fuel cell assembly (1).

5. Fuel cell assembly (1) comprising a number of membrane-electrode units (3) disposed between bipolar plates (3a) as well as a coolant circuit (6) with a coolant (K), in particular with deionate, for conducting heat away from the fuel cell assembly (1),
**characterised in that** the coolant (K) contains a non-ionic surfactant (T) with a cloud point below 30°C, in particular below 20°C, to reduce the surface tension of the bipolar plates, wherein the surfactant (T) is polyethylene-polypropylene glycol monododecyl ether.

6. Fuel cell assembly (1) according to claim 5,
comprising a feed line (8) for the non-ionic surfactant (T), which flows into the coolant circuit (6).

## Revendications

1. Procédé de refroidissement d'un agencement ( 1 ) de pile à combustible comprenant deux unités ( 3 ) membrane-électrode disposées entre des plaques ( 3a ) bipolaires, dans lequel, à l'aide d'un agent réfrigérant, notamment à l'aide d'eau déminéralisée, on évacue de la chaleur de l'agencement ( 1 ) de piles à combustible, **caractérisé en ce que** l'on ajoute au fluide ( K ) réfrigérant, pour réduire la tension superficielle des plaques ( 3a ) bipolaires, un agent ( T ) tensioactif non ionique, qui a un point de trouble inférieur à 30°C, et notamment inférieur à 20°C, en utilisant comme agent ( T ) tensioactif de l'oxyde monodécylique de polyéthylène-polypropylèneglycol.

2. Procédé suivant la revendication 1,
**caractérisé en ce que** l'agent ( T ) tensioactif est un agent tensioactif donnant peu de mousse.

3. Procédé suivant l'une des revendications précédentes,
**caractérisé en ce que** la concentration de l'agent ( T ) tensioactif dissout dans le fluide ( K ) réfrigérant est plus petite que 0,1 % en volume.

4. Utilisation de l'oxyde monodécylique de polyéthylène-polypropylèneglycol comme agent ( T ) tensioactif non ionique ayant un point de trouble inférieur à 30°C, notamment inférieur à 20°C, dans un fluide ( K ) réfrigérant, notamment de l'eau déminéralisée pour le refroidissement d'un agencement ( 1 ) de piles à combustible.

5. Agencement ( 1 ) de piles à combustible comprenant plusieurs unités ( 3a ) de membrane-électrode disposées entre des plaques ( 3a ) bipolaires, ainsi qu'un circuit ( 6 ) de fluide réfrigérant ayant un fluide ( K ) réfrigérant, notamment de l'eau déminéralisée, pour évacuer de la chaleur de l'agencement ( 1 ) de piles à combustible, **caractérisé en ce que** le fluide ( K ) réfrigérant contient, pour réduire la tension superficielle des plaques bipolaires, un agent ( T ) tensioactif non ionique ayant un point de trouble inférieur à 30°C, notamment inférieur à 20°C, l'agent (T) tensioactif étant de l'oxyde monodécylique de polyéthylène-polypropylèneglycol.

6. Agencement ( 1 ) de piles à combustible suivant la revendication 5,
comprenant un conduit ( 8 ) d'apport de l'agent ( T ) tensioactif non ionique, qui débouche dans le circuit ( 6 ) de fluide réfrigérant.
